# EUROPÄISCHE PATENTSCHRIFT

(11) **EP 0 405 232 B1**
(45) Veröffentlichungstag und Bekanntmachung des Hinweises auf die Patenterteilung: **18.08.1993**
(21) Anmeldenummer: 90111184.9
(22) Anmeldetag: 13.06.1990
(51) Int. Cl.: B62D 31/00

(54) **Laderaumabdeckung für Kraftwagen**
Cover for a luggage compartment for automobiles
Couvercle pour une soute à bagages pour automobiles

(30) Priorität: 26.06.1989 DE 3920874
(43) Veröffentlichungstag der Anmeldung: 02.01.1991
(73) Patentinhaber: PETER BUTZ GmbH & Co Verwaltungs-KG, 40764 Langenfeld (DE)
(72) Erfinder: Butz, Eugen Otto, D-4010 Hilden (DE)
(74) Vertreter: Ostriga, Harald

(56) Entgegenhaltungen:
- DE-A- 3 314 444

## Beschreibung

Die Erfindung betrifft eine Laderaumabdeckung für Kraftwagen, insbesondere für Kombinations-Personenkraftwagen, wie sie entsprechend dem Oberbegriff des Anspruchs 1 durch die DE-A-33 14 444 bekanntgeworden ist.

Die bekannte Laderaumabdeckung befaßt sich mit der Aufgabe, eine leicht bedienbare Anordnung zu schaffen, bei welcher eine zur Schwergängigkeit oder Blockierung führende Verkantungsklemmung vermieden wird. Bei der bekannten Laderaumabdeckung ist diese Aufgabe dadurch gelöst, daß jeder Führungskörper von seiner zugfesten Position bezüglich des ihm zugeordneten Tragestabes entgegen der Rückstellkraft einer Feder über einen axialen Toleranzhub in seine druckfeste Position relativverschieblich ist. Hierbei eliminiert die abgefederte begrenzte Axialverschieblichkeit zwischen Tragestab und Führungskörper jegliche Verkantungsklemmung zwischen Führungskörper und der Führungsschiene. Auf diese Weise läßt sich die bekannte Laderaumabdeckung in jedem Fall problemlos öffnen und schließen. Außerdem gestattet die bekannte Laderaumabdeckung mit ihrer begrenzten Axialverschieblichkeit den Ausgleich von karosserieseitig bedingten Einbautoleranzen, die in der Regel ebenfalls zu einer schwergängigen Bedienbarkeit führen.

Ausgehend von der bekannten Laderaumabdeckung (DE-OS 33 14 444), befaßt sich die vorliegende Erfindung mit der Aufgabe, die Bedienbarkeit im Sinne einer Vermeidung von Schwergängigkeit und Blockierung durch Verkantungsklemmung mit anderen Mitteln zu verbessern. Diese Mittel sollen außerdem in Verbindung mit entgegen Federkraft teleskopierbaren Tragestäben auch für den Einsatz von Laderaumabdeckungen für Laderäume mit uneinheitlicher Querweite (lichte Weite des Einbaufeldes) geeignet sind.

Diese Aufgabe wurde entsprechend der Erfindung durch die Kennzeichnungsmerkmale des Anspruchs 1 gelöst. Hiernach sind die zur Innenfläche des Profilbodens hinweisende äußere Stirnfläche und/oder die zu den Flanschen hinweisende innere Stirnfläche jedes Führungskörpers jeweils mit einem konvex gekrümmten Kontaktbereich für die Innenfläche des Profilbodens bzw. für die Innenfläche der Flansche versehen. Dies bedeutet, daß die Führungskörper bei einer versehentlich herbeigeführten Schräglage ihres Tragestabes relativ zu den Führungsschienen entweder die Innenflächen der Flansche bzw. eine Flansch-Innenfläche oder die Innenflächen des Profilbodens niemals mit einer Kante, sondern mit einer gekrümmten Fläche kontaktieren, welche eine Verkantungsklemmung von Haus aus entweder vermeidet oder leicht aufhebbar macht. Konvex gekrümmte Kontaktbereiche an den äußeren Stirnflächen der Führungskörper kommen dann zur Anwendung, wenn bei beispielsweise sich zum Heck hin verengenden Laderäumen die Tragestäbe entgegen Druckfederkraft teleskopierend einschiebbar sind. Für den Fall jedoch, daß die Tragestäbe bei einer solchen Verengung des Laderaums mit Zugfederkraft teleskopierend zusammenziehbar sind, kommen die konvex gekrümmten Kontaktbereiche an den inneren Stirnflächen der Führungskörper zum Einsatz.

In weiterer Ausgestaltung der Erfindung ist die äußere Stirnfläche jedes Führungskörpers als Kontaktbereich konvex kugelkalottenförmig, insbesondere etwa konvex-halbkugelkalottenförmig ausgebildet.

Obwohl die Führungskörper selbst als um die Längsachse des zugehörigen Tragestabes drehbare Rollen ausgebildet sein können, hat sich eine Ausführungsform als vorteilhaft herausgestellt, wonach jeder Führungskörper etwa nach Art eines Kulissen-Gleitsteins ausgebildet ist. Diese Ausbildung schafft die Möglichkeit, als Kontaktbereich aus einer Stirnfläche oder aus beiden Stirnflächen jedes Führungskörpers mindestens eine Führungsrolle frei vorragend vorzusehen, deren Drehachse sich etwa parallel zur Ebene des Führungsschlitzes der Führungsschiene erstreckt. Je nachdem, welcher Kontaktbereich - wie vorerwähnt - in Frage kommt, werden die Führungsrollen entweder der äußeren Stirnfläche oder der inneren Stirnfläche oder aber beiden Stirnflächen des jeweiligen Führungskörpers zugeordnet.

Eine zweckmäßig angepaßte Ausgestaltung der Führungsschiene im Hinblick auf die verkantungs-bzw. verklemmungsfreie Funktion der Führungskörper besteht darin, daß der dem nach unten weisenden Profilsteg angeformte untere Flansch breiter ist als der obere Flansch und daß die Längsmittelachse des Tragestabes bezüglich des gleitsteinartigen Führungskörpers außermittig nach oben versetzt ist.

Diese vorbeschriebene Ausgestaltung bildet Voraussetzung für weitere Erfindungsmerkmale, wonach mindestens eine Führungsrolle in Höhe der Innenfläche des unteren Flansches angeordnet ist. Eine besonders zweckmäßige Ausführungsform besteht sodann darin, daß auf beiden Seiten der Längsmittelachse des Tragestabes - in Längsrichtung der Führungsschiene gesehen - je eine zur Innenfläche des unteren Flansches hinweisende Führungsrolle angeordnet ist.

Damit die Führungskörper eine genügende axiale Beweglichkeit relativ zu den Flanschen der Führungsschienen erhalten, hat es sich als zweckmäßig herausgestellt, die axiale Länge der für den Eingriff mindestens eines Flansches bestimmten führungskörperseitigen Führungsnut mit einem großen Axialspiel zu versehen, insbesondere aber so auszubilden, daß die axiale Länge der führungskörperseitigen Führungsnut etwa angenähert bzw. mindestens der halben lichten Querweitbreite einer Führungsschiene entspricht.

In den Zeichnungen ist die erfindungsgemäße Laderaumabdeckung anhand bevorzugter Ausführungsbeispiele näher dargestellt,
es zeigen,
Fig. 1 eine schematische Darstellung zweier Führungsschienen mit einem sich in Geradzug-Stellung befindlichen Tragestab unter Weglassung der einfaltbaren Abdeckplane und weiterer Tragestäbe,
Fig. 2 eine gegenüber Fig. 1 vergrößerte Teilschnittansicht entsprechend der Schnittlinie II-II in Fig. 1 und
Fig. 3 die Anordnung gemäß Fig. 1 bei Schrägzug.

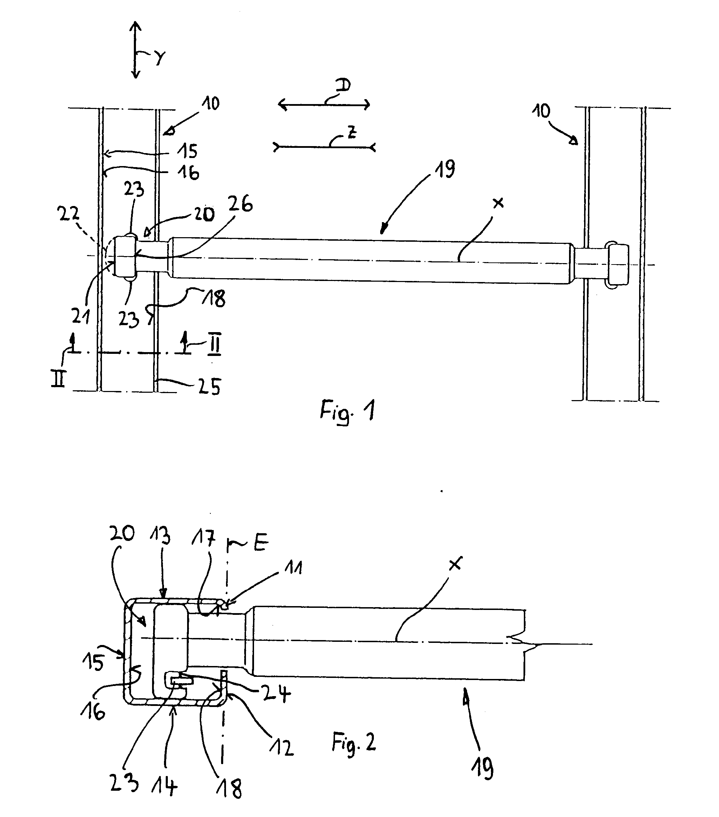

Aus den Zeichnungen sind zwei Führungsschienen 10 zu ersehen, deren Profil C-förmig ist. Demnach weist das Führungsschienen-Profil (Fig. 2) zwei Flansche 11 (oberer Flansch), 12 (unterer Flansch), einen oberen Profilsteg 13, einen unteren Profilsteg 14 sowie schließlich einen beide Profilstege 13, 14 miteinander verbindenden Profilboden 15 auf.

Der untere Flansch 12 ist breiter bemessen als der obere Flansch 11.

Die Innenfläche des Profilbodens 15 ist mit 16 bezeichnet, während die Innenflächen der Flansche 11 und 12 die Bezugsziffern 17, 18 tragen.

Einer der Tragestäbe für die Halterung der nicht gezeichneten einfaltbaren flexiblen Abdeckung ist mit 19 bezeichnet.

An beiden Enden des Tragestabes 19 ist je ein Führungskörper 20 befestigt.

Die Tragestäbe 19 können hinsichtlich ihrer axialen Länge starr oder aber auch in nicht dargestellter Weise teleskopierbar ausgebildet sein.

Die Teleskopierbarkeit erfolgt hierbei entgegen Federkraft. Wird die Federkraft von einer Druckfeder bewirkt, würden die beiden Führungskörper 20 versuchen, entsprechend dem Doppelpfeil D auseinanderzustreben.

Für den Fall, daß die Teleskopierbarkeit unter Zuhilfenahme einer Zugfeder erfolgen sollte, würden die beiden Führungskörper 20 entsprechend dem Doppelpfeil Z aufeinanderzubelastet.

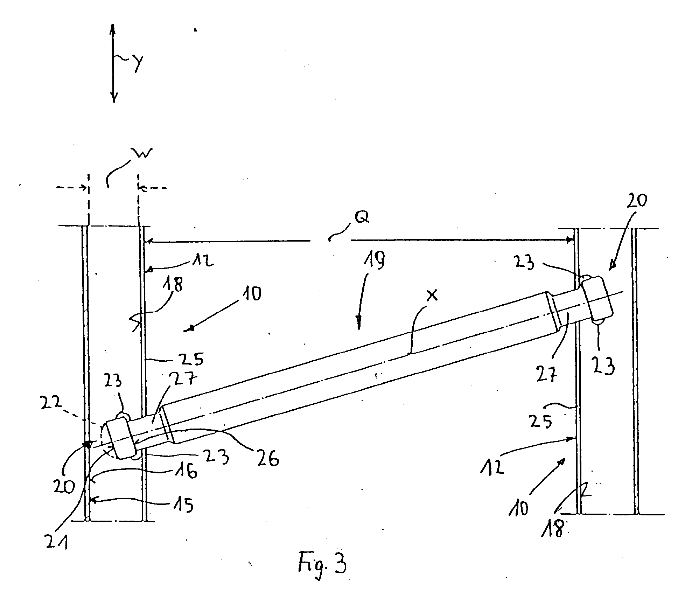

Nach einer Ausführungsform ist es möglich, daß die der Innenfläche 16 des Profilbodens 15 zugewandte äußere Stirnfläche 21 des Führungskörpers einen teilkugelkalottenförmigen Ansatz 22 aufweist, der in den Fig. 1 und 3 (jeweils am links dargestellten Führungskörper 20) gestrichelt dargestellt ist.

Nach einer bevorzugten Ausführungsform, gemäß welcher der Führungskörper 20 nach Art eines Kulissen-Gleitsteins - wie dargestellt - und gemäß Fig. 2 zugunsten einer Vergrößerung seines unteren Bereichs asymmetrisch zur Längsmittelachse x ausgebildet ist, sind in Verschieberichtung der Führungskörper 20 bzw. in Längsrichtung y der Führungsschiene 10 beidseitig symmetrisch der Längsmittelachse x jeweils eine Führungsrolle 23 am Führungskörper 20 befestigt.

Die Drehachse 24 jeder Führungsrolle 23 erstreckt sich hierbei parallel zur Ebene E des mit 25 bezeichneten, zwischen den Schmalflächen der Flansche 11, 12 gebildeten Führungsschlitzes.

Lediglich ergänzend sei erwähnt, daß aus Gründen einer Zeichnungsvereinfachung der Bereich der in den Zeichnungen rechts dargestellten Führungskörper 20 unvollständig beschriftet ist.

In Verbindung mit Fig. 3 wird deutlich, daß sich bei einer unbeabsichtigten Schrägstellung des Tragestabes 19 keine Verkantungsklemmung ergeben kann, weil jeweils eine Führungsrolle 23 jedes Führungskörpers 20 auf der Innenfläche 18 des unteren Flansches 12 abrollen kann.

Die in den Fig. 1-3 gezeigte Anordnung der Rollen 23 benachbart dem unteren Flansch 12 ist im Falle einer Teleskopierbarkeit des Tragestabes 19 für eine Zugfederbelastung entsprechend dem Doppelpfeil Z geeignet.

Für den Fall aber, daß die Teleskopierbarkeit eines Tragestabes 19 druckfederbelastet entsprechend dem Doppelpfeil D erfolgen sollte, müßten die beiden Führungsrollen 23 nicht an der inneren Stirnfläche 26 des Führungskörpers 20 sondern vielmehr an der äußeren Stirnfläche 21 eines jeden Führungskörpers 20 angeordnet sein.

Aus den Zeichnungen ist auch ersichtlich, daß die führungskörperseitige Führungsnut 27 in Richtung der Längsachse x sehr lang ausgebildet ist und im vorliegenden Fall eine axiale Länge aufweist, die mindestens der Hälfte der lichten Weite w der Führungsschiene 10 entspricht. Die große Axiallänge der Führungsnut 27 ist beim gezeigten Ausführungsbeispiel wichtig für eine verklemmungs- bzw . verkantungsfreie Schräglage eines Tragestabes 19.

Die Führungskörper 20 bestehen aus einem gleitfähigen Kunststoff, z.B. aus PA, und sind in zweckmäßiger Weise in den Enden der aus einem Mehrkant-Stahlhohlprofil gebildeten Tragestäbe 19 z.B. formschlüssig befestigt.

Anhand von Fig. 3 ist auch vorstellbar, daß sich die Querweite Q zwischen den Führungsschienen 10 in Anpassung an das laderaumseitige Einbaufeld ändern kann. In einem solchen Falle sind in Längsrichtung x mit oder ohne Federkraft teleskopierbare Tragstäbe 19 Vorbedingung.

## Patentansprüche

1. Laderaumabdeckung für Kraftwagen, insbesondere für Kombinations-Personenkraftwagen, mit einer karosserieseitig befestigten, in einer Offen- oder Geschlossenstellung haltbaren, mindestens teilweise flexiblen Abdeckplane, an welcher im Parallelabstand voneinander angeordnete Tragestäbe (19) befestigt sind, die Einfaltbereiche der Abdeckplane zwischen sich bilden, wobei jeder Tragestab an seinen beiden freien Enden je einen Führungskörper (20) trägt, der jeweils in einer sich im wesentlichen quer zum Tragestab erstreckenden karosserieseitig befestigten, im wesentlichen C-förmig profilierten, mit einem Profilboden, zwei Profilstegen (13,14) und zwei Flanschen (11,12) versehenen Führungsschiene (10) aufgenommen ist, wobei die Flansche jeweils einen sich in Längsrichtung der Führungsschiene erstreckenden Führungsschlitz zwischen sich bilden und wobei mindestens ein Flansch in eine führungskörperseitige Führungsnut (27) eingreift, dadurch gekennzeichnet, daß die zur Innenfläche (16) des Profilbodens (15) hinweisende äußere Stirnfläche (21) und/oder die zu den Flanschen (11, 12) hinweisende innere Stirnfläche (26) jedes Führungskörpers (20) jeweils mit mindestens einem konvex gekrümmten Kontaktbereich (22; 23) für die Innenfläche (16) des Profilbodens (15) bzw. für die Innenflächen (17, 18) der Flansche (11, 12) versehen sind.

2. Laderaumabdeckung nach Anspruch 1, dadurch gekennzeichnet, daß die äußere Stirnfläche (21) jedes Führungskörpers (20) als Kontaktbereich (22) konvex-kugelkalottenförmig, insbesondere etwa konvex-halbkugelkalottenförmig, ausgebildet ist.

3. Laderaumabdeckung nach Anspruch 1 oder nach Anspruch 2, dadurch gekennzeichnet, daß jeder Führungskörper (20) etwa nach Art eines Kulissen-Gleitsteins ausgebildet ist.

4. Laderaumabdeckung nach Anspruch 3, dadurch gekennzeichnet, daß als Kontaktbereich aus einer Stirnfläche (21) oder aus beiden Stirnflächen (21, 26) jedes Führungskörpers (20) mindestens eine Führungsrolle (23) frei vorragt, deren Drehachse (24) sich parallel zur Ebene (E) des Führungsschlitzes (25) erstreckt.

5. Laderaumabdeckung nach Anspruch 4, dadurch gekennzeichnet, daß der dem nach unten weisenden Profilsteg (14) angeformte untere Flansch (12) breiter ist als der obere Flansch (11) und daß die Längsmittelachse (x) des Tragestabes (19) bezüglich des gleitsteinartigen Führungskörpers (20) außermittig nach oben versetzt angeordnet ist.

6. Laderaumabdeckung nach Anspruch 5, dadurch gekennzeichnet, daß mindestens eine Führungsrolle (23) in Höhe der Innenfläche (18) des unteren Flansches (12) angeordnet ist.

7. Laderaumabdeckung nach Anspruch 6, dadurch gekennzeichnet, daß auf beiden Seiten der Längsmittelachse (x) des Tragestabes (19) je eine zur Innenfläche (18) des unteren Flansches (12) hinweisende Führungsrolle (23) angeordnet ist.

8. Laderaumabdeckung nach einem der vorangehenden Ansprüche, dadurch gekennzeichnet, daß die axiale Länge der für den Eingriff mindestens eines Flansches bestimmten führungskörperseitigen Führungsnut (27) mit einem großen Axialspiel versehen, insbesondere derart ausgebildet ist, daß die axiale Länge (bei x) der führungskörperseitigen Führungsnut (27) etwa angenähert bzw. mindestens der halben lichten Querweite (W) der Führungsschiene (10) entspricht.

## Claims

1. A storage space cover for motor vehicles, more particularly for estate cars, with an at least partially flexible cover sheet, which is secured to the car body, can be held in an open or closed position and on which supporting struts (19) are secured at a parallel distance from one another, the supporting struts forming between them the folding regions of the cover sheet and each supporting strut supporting at each of its two free ends a guide element (20), which is accommodated in each case in a guide rail (10), which is secured to the car body, extends substantially transversely to the supporting strut, has a substantially C-shaped profile with a profile base, two profile webs (13, 14) and two flanges (11, 12), the flanges forming between them in each case a guide slot extending in the longitudinal direction of the guide rail, and at least one flange engaging in a guide groove (27) in the guide element, characterised in that the outer end face (21) facing the inner surface (16) of the profile base (15) and/or the inner end face (26) of each guide element (20) facing the flanges (11, 12) is/are provided in each case with at least one convexly curved contact region (22; 23) for the inner surface (16) of the profile base (15) or for the inner surface (17, 18) of the flanges (11, 12).

2. A storage space cover according to claim 1, characterised in that the outer end face (21) of each guide element (20) is constructed as a contact region (22) with a convex spherical segment shape, more particularly an approximately convex semi-spherical segment shape.

3. A storage space cover according to claim 1 or claim 2, characterised in that each guide element (20) is constructed in the manner of a sliding member.

4. A storage space cover according to claim 3, characterised in that at least one guide roller (23) projects freely as a contact region from an end face (21) or from both end faces (21, 26) of each guide element (20), the axis of rotation (24) of each guide roller extending parallel to the plane (E) of the guide slot (25).

5. A storage space cover according to claim 4, characterised in that the lower flange (12) formed on the downwardly facing profile web (14) is wider than the upper flange (11) and the longitudinal central axis (x) of the supporting strut (19) is upwardly offset in relation to the sliding member-like guide element (20).

6. A storage space cover according to claim 5, characterised in that at least one guide roller (23) is arranged at the level of the inner surface (18) of the lower flange (12).

7. A storage space cover according to claim 6, characterised in that a guide roller (23) facing the inner surface (18) of the lower flange (12) is arranged on either side of the longitudinal central axis (x) of the supporting strut (19).

8. A storage space cover according to one of the preceding claims, characterised in that the axial length of the guide groove (27) provided in the guide element for the engagement of at least one flange is provided with a large degree of axial clearance, and is more particularly constructed in such a manner that the axial length (at x) of the guide groove (27) in the guide element is approximately equal to or is at least half the clear transverse width (w) of the guide rail (10).

## Revendications

1. Bâche de recouvrement d'espace de charge pour véhicule automobile, notamment pour véhicule privé du type break, comprenant un panneau de recouvrement au moins partiellement flexible, fixé à la carrosserie, qui peut être maintenu dans une position ouverte ou fermée, auquel sont fixées des baguettes porteuses, disposées parallèlement à un certain écartement mutuel, qui forment entre elles des régions de repliage du panneau de recouvrement, chaque baguette porteuse portant à chacune de ses extrémités libres un corps de guidage (20) qui se loge dans un rail de guidage (10) fixé à la carrosserie, s'étendant sensiblement transversalement à la baguette porteuse et présentant un profil sensiblement en C qui comporte un fond de profil, deux bases de profil (13, 14) et deux ailes (11, 12), les ailes formant entre elles une fente de guidage qui s'étend dans la direction longitudinale du rail de guidage, et au moins une aile étant engagée dans une gorge de guidage (27) portée par le corps de guidage,
caractérisée en ce que la surface frontale extérieure (21) qui regarde vers la surface intérieure (16) du fond (15) du profil et/ou la surface frontale intérieure (26), qui regarde vers les ailes (11, 12) de chaque corps de guidage (20) sont munies chacune d'au moins une zone de contact (22 ; 23) courbe convexe, pouvant porter contre la surface intérieure (16) du fond (15) du profil ou, respectivement, contre les surfaces intérieures (17, 18) des ailes (11, 12).

2. Bâche de recouvrement d'espace de charge selon la revendication 1,
caractérisée en ce que la surface frontale extérieure (21) de chaque corps de guidage (20) est constituée par une zone de contact (22), en forme de calotte de sphère convexe, notamment à peu près en forme de calotte hémisphérique convexe.

3. Bâche de recouvrement d'espace de charge selon la revendication 1 ou selon la revendication 2,
caractérisé en ce que chaque corps de guidage (20) est constitué à peu près à la façon d'un patin de glissière.

4. Bâche de recouvrement d'espace de charge selon la revendication 3,
caractérisée en ce que, pour constituer la zone de contact, au moins une roulette de guidage (23) fait saillie librement sur une surface frontale (21) ou sur chacune des deux surfaces frontales (21, 26) de chaque corps de guidage (20), l'axe de rotation (24) de chaque roulette s'étendant parallèlement au plan (E) de la fente de guidage (25).

5. Bâche de recouvrement d'espace de charge selon la revendication 4,
caractérisée en ce que l'aile inférieure (12) formée sur la base de profil (14) dirigée vers le bas est plus large que l'aile supérieure (11) et en ce que l'axe médian longitudinal (x) de la baguette porteuse (19) est disposé en position excentrée, déportée vers le haut, par rapport au corps de guidage (20) en forme de coulisseau.

6. Bâche de recouvrement d'espace de charge selon la revendication 5,
caractérisée en ce qu'au moins une roulette de guidage (23) est disposée à la hauteur de la surface intérieure (18) de l'aile inférieure (12).

7. Bâche de recouvrement d'espace de charge selon la revendication 6,
caractérisé en ce que, de chaque côté de l'axe médian longitudinal (x) de la baguette porteuse (19), est disposée une roulette de guidage (23) qui fait face à la surface intérieure (18) de l'aile inférieure (12).

8. Bâche de recouvrement d'espace de charge selon une des revendications précédentes,
caractérisée en ce que la longueur axiale de la gorge de guidage (27) portée par le corps de guidage, destinée à l'engagement d'au moins une aile, présente un grand jeu axial et, en particulier, est calculée de manière que la longueur axiale (selon x) de la gorge de guidage (27) portée par le corps de guidage corresponde approximativement, ou au moins, à la moitié de la largeur transversale libre (W) du rail de guidage (10).
